# EUROPEAN PATENT APPLICATION

(11) **EP 2 566 168 A2**
(43) Date of publication of application: **06.03.2013**
(21) Application number: 12173609.4
(22) Date of filing: 26.06.2012
(51) Int. Cl.: H04N 13/02

(54) **Apparatus and method for converting 2D content into 3D content**

(30) Priority: 05.09.2011 KR 20110089462
(71) Applicant: Samsung Electronics Co., Ltd., Suwon-si, Gyeonggi-do, 443-742 (KR)
(72) Inventor: Moon, Ji-bum, Seoul (KR); Kim, Han-soo, Gyeonggi-do (KR); Ahn, Won-seok, Gyeonggi-do (KR); Han, Seung-hoon, Seoul (KR); Kim, Kyu-yong, Gyeonggi-do (KR)
(74) Representative: Fearnside, Andrew Simon

(57) **Abstract**

Disclosed are an apparatus and method for converting 2D video contents into 3D video contents. The method includes: displaying a first work user interface (UI) relating to at least one item for converting 2D contents into 3D contents; by a first worker, determining a working direction relating to performing a conversion upon the at least one item by using the first work UI; displaying a second work UI showing the working direction determined by the first worker; and by a second worker, executing the working direction upon the at least one item by the second work UI. Accordingly, when a plurality of workers performs one or more 2D-3D conversions, work efficiency is improved, and good communication between workers is enabled.

## Description

### BACKGROUND

### Field

Apparatuses and methods consistent with the exemplary embodiments relate to an apparatus and method for converting contents, and more particularly to an apparatus and method of converting two-dimensional (2D) video contents into three-dimensional (3D, e.g. stereoscopic) video contents.

### Description of the Related Art

Video contents, such as, for example, films, a drama, sports games, etc., (hereinafter, referred to as a "content") is reproduced by a display apparatus having a content play function, such as, for example, a television (TV), a personal computer (PC), a smart phone, a smart pad, a portable multimedia player (PMP), a MP3 player, etc. With the recent development of 3D image display technology, such contents are produced as 3D contents and reproduced by the display apparatus, which is capable of displaying a 3D image.

To reduce time, costs, etc. taken in producing such 3D contents, there has been proposed technology of acquiring 3D contents by applying a predetermined conversion technology to 2D contents.

Nevertheless, a heavy workload is still required when converting the 2D contents into the 3D contents, and thus many workers may jointly participate in producing one 3D content.

If a plurality of workers participate in producing one 3D content, work distribution among workers and work management are important in improving work efficiency, and effective communication among workers is also necessary.

### SUMMARY

According to the present invention there is provided an apparatus and method as set forth in the appended claims. Other features of the invention will be apparent from the dependent claims, and the description which follows.

Accordingly, one or more exemplary embodiments provide an apparatus and method for converting contents, including the use of a user interface for improving work efficiency when a plurality of workers perform 2D-3D (e.g. stereoscopic) conversions.

One or more exemplary embodiments provide an apparatus and method for converting contents, including provision of a user interface for improving work efficiency by effectively distributing 2D-3D items for conversion and/or processing tasks based on work characteristics.

One or more exemplary embodiments provide an apparatus and method for converting contents, including provision of a user interface for improving work efficiency by facilitating effective communication among workers.

The foregoing and/or other aspects may be achieved by providing a method for converting two-dimensional (2D) contents into three-dimensional (3D) contents by using a content converting apparatus. The method includes: displaying a first work user interface (UI) relating to at least one item for converting 2D contents into 3D contents; by a first worker, determining a working direction relating to performing a conversion upon the at least one item by using the first work UI; displaying a second work UI showing the working direction determined by the first worker; and by a second worker, executing the working direction upon the at least one item by using the second work UI.

The determining of the working direction may include generating the working direction for each item to be converted.

The generating of the working direction may include generating the working direction for each object within a predetermined frame of the 2D contents.

The displaying of the second work UI may include displaying a list of the at least one generated working direction.

The working direction may include a working direction relating to at least one of object extraction within a predetermined frame of the 2D contents and depth assignment.

The first work UI may include a tool UI displayed on an image of a corresponding frame and controllable by the first worker, and the determining of the working direction may include providing a working direction relating to at least one of the object extraction and the depth assignment by using the tool UI.

The method may further include displaying the provided working direction on an image of a corresponding frame if the working direction is selected.

Another aspect may be achieved by providing an apparatus for converting two-dimensional (2D) contents into three-dimensional (3D) contents. The apparatus includes: a user input unit which receives a command from a worker; a display unit; and a converter which: displays a first work user interface (UI) relating to at least one item for converting 2D contents into 3D contents on the display unit; determines a working direction relating to performing a conversion upon the at least one item based on a command received from a first worker by using the first work UI; displays a second work UI showing the determined working direction; and executes the working direction upon the at least one item in response to a command received from a second worker by using the second work UI.

The converter may generate the working direction for each item to be converted in response to the command received from the first worker.

The converter may generate the working direction for each object within a predetermined frame of the 2D contents in response to the command received from the first worker.

The second work Ul may include a list of the at least one generated working direction.

The working direction may include a working direction relating to at least one of object extraction within a predetermined frame of the 2D contents and depth assignment.

The first work Ul may include a tool Ul displayed on an image of a corresponding frame and controllable by the first worker, and the converter may provide a working direction relating to at least one of the object extraction and the depth assignment in response to the command received from the first worker via the tool UI.

The converter may display the provided working direction on an image of a corresponding frame on the display unit if the working direction is selected in response to the command received from the second worker.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 shows a configuration of a content converting apparatus according to an exemplary embodiment;
FIG. 2 is a flowchart showing operations of the content converting apparatus of FIG. 1;
FIG. 3 is a flowchart showing an example of detailed operations of the content converting apparatus shown in FIG. 1;
FIG. 4 shows an example of a first work user interface (UI) included in the content converting apparatus shown in FIG. 1;
FIG. 5 shows an example of additional information displayed by the first work UI shown in FIG. 4;
FIGS. 6 and 7 show examples of providing a working direction by using a tool UI included in the content converting apparatus shown in FIG. 1;
FIG. 8 shows an example of a second work UI included in the content converting apparatus shown in FIG. 1; and
FIG. 9 shows an example of a detailed list of directions displayed by the second work UI shown in FIG. 8.

### DETAILED DESCRIPTION OF EXEMPLARY EMBODIMENTS

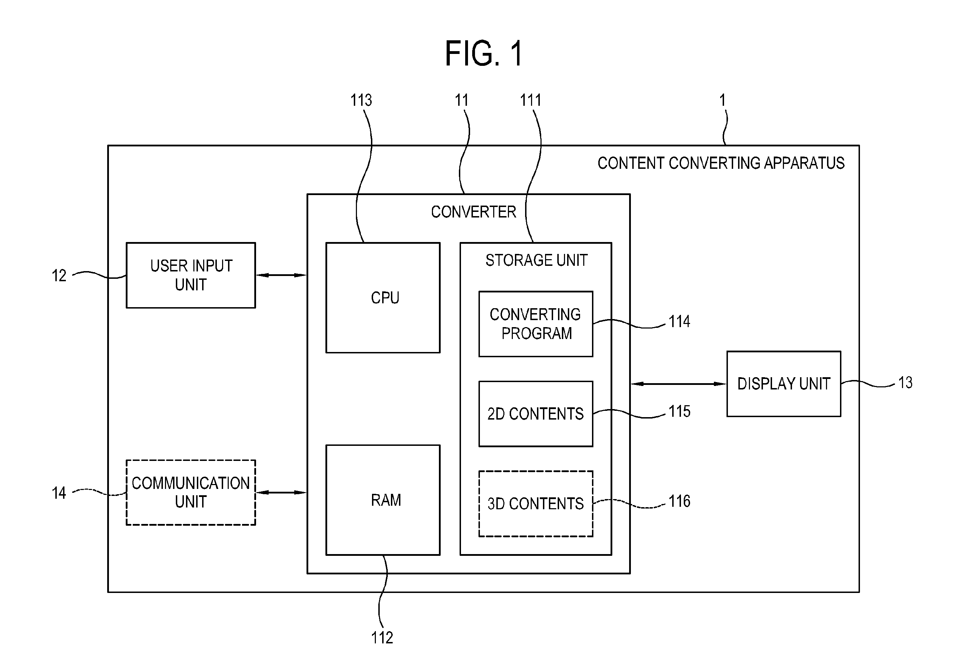

Below, exemplary embodiments will be described in detail with reference to accompanying drawings. FIG. 1 shows a configuration of a content converting apparatus according to an exemplary embodiment. The content converting apparatus 1 converts 2D video contents into 3D video contents. In this exemplary embodiment, the contents include moving picture contents, such as, for example, one or more of a film, a drama, a sports contest, etc.

The content converting apparatus 1 may receive the 2D contents to be converted into the 3D contents from a predetermined 2D content providing apparatus (not shown). The content converting apparatus 1 may receive the 2D contents from the 2D content providing apparatus through a predetermined network (not shown). The 2D content providing apparatus may be, for example, a network server which stores the 2D contents and provides the 2D contents to the content converting apparatus 1 upon request from the content converting apparatus 1.

Alternatively, the content converting apparatus 1 may receive the 2D contents from the 2D content providing apparatus through a data transmitting means other than the network. For example, in one exemplary embodiment, the 2D content providing apparatus includes a storage means, such as, for example, one or more of a hard disk drive, a flash memory, etc. for storing the 2D content, and is connected as a local device to the content converting apparatus 1, thereby transmitting the 2D contents to the content converting apparatus 1 upon request from the content converting apparatus 1. In this case, there is no limit to a local connection method between the content converting apparatus 1 and the 2D content providing apparatus, provided that the local connection method allows for data transmission of 2D contents. For example, the local connection method may include using a communication connection with a universal serial bus (USB), or the like.

Alternatively, the content converting apparatus 1 may receive the 2D contents from a 3D content providing apparatus (not shown). For example, in another exemplary embodiment, the 3D content providing apparatus transmits the 2D contents to the content converting apparatus 1 and receives the 3D contents converted by the content converting apparatus 1, thereby providing the 3D contents to a predetermined user terminal (not shown). The user terminal may be, for example, a television (TV), a personal computer (PC), a smart phone, a smart pad, a portable media player (PMP), an MP3 player, or any suitable type of user terminal having a function of displaying the 3D contents received from the content converting apparatus 1 as a 3D stereoscopic image.

Alternatively, the content converting apparatus 1 may transmit the converted 3D contents to a user terminal which has a function of displaying the 3D contents as a 3D stereoscopic image. For example, in another exemplary embodiment, the content converting apparatus 1 may provide the 3D contents to the user terminal through the network.

In this exemplary embodiment, there is no limit upon a method or type of network communication to be used. For example, the network communication may include wired communication and/or wireless communication, etc., provided that the method or type of network communication being used allows for data communication for transmitting the 2D contents and/or the 3D contents. Further, the network communication may include any or all of the known methods and/or types of communication.

As shown in FIG. 1, the content converting apparatus 1 includes a converter 11 and a communication unit 14. The converter 11 converts 2D contents into 3D contents. The 2D contents may include, for example, a plurality of video frames (hereinafter, referred to as a "frame"). The 3D contents, which utilize the phenomenon of a viewer's binocular parallax, may include a plurality of left-eye frames and a plurality of right-eye frames. In particular, a respective frame from among the plurality of video frames which include 2D contents may be converted into a corresponding pair of video frames which include 3D contents, including a left-eye frame and a corresponding right-eye frame. The conversion from the 2D contents into the 3D contents (hereinafter, referred to as "2D-3D conversion") performed by the converter 11 will be further described below.

The communication unit 14 may perform, for example, data communication between the 2D content providing apparatus and the content converting apparatus 1, data communication between the 3D content providing apparatus and the content converting apparatus 1, or data communication between the user terminal and the content converting apparatus 1.

The converter 11 may include a storage unit 111, a random access memory (RAM) 112, and a central processing unit (CPU) 113. The storage unit 111 may store a converting program 114 for implementing the 2D-3D conversion, 2D contents 115 to be converted, and 3D contents 116 converted from the 2D contents. The storage unit 111 may be embodied by a non-volatile memory, such as, for example, one or more of a hard disk drive, a flash memory, etc. The RAM 112 stores at least a part of the converting program 114 when the converter 11 operates, and the CPU 113 executes the converting program 114 stored in the RAM 112. The converting program 114 includes instructions which are executable by the CPU 113. The storage unit 111 is an example of a computer readable recording medium.

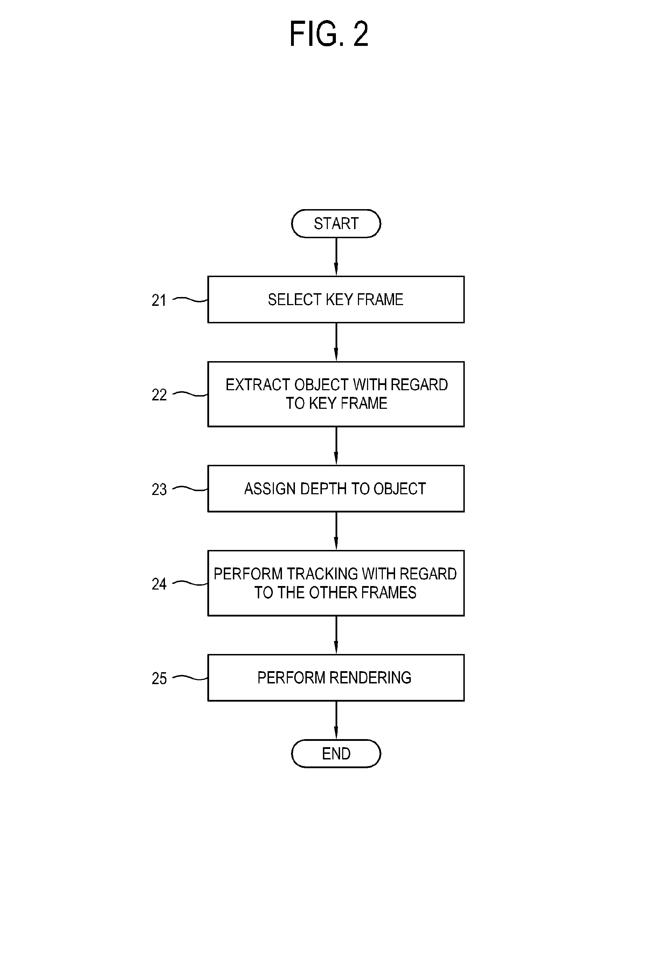

FIG. 2 is a flowchart showing operations of the content converting apparatus 1 of FIG. 1, according to an exemplary embodiment. As shown in FIG. 2, operations (hereinafter, referred to as "2D-3D conversion process") of the content converting apparatus 1 correspond to a content converting method implemented by commands of the converting program 114. In this exemplary embodiment, the 2D-3D conversion process includes selecting a key frame at operation 21, extracting an object at operation 22, assigning depth to the object at operation 23, tracking at operation 24, and rendering at operation 25.

First, in the operation 21 of selecting the key frame, an arbitrary key frame is selected from among the plurality of frames which include the 2D contents. Among the plurality of frames which include the 2D contents, a frame capable of maximizing accuracy and reliability of the 2D-3D conversion may be selected as the key frame. The selection of the key frame will be further described below.

Referring back to FIG. 2, in the operation 22 of extracting the object, an object on which a 3D effect will be implemented is extracted with respect to the selected key frame. The extracted object generally corresponds to a major image contained in a scene of each frame. For example, the object may correspond to an image of a main character in a scene where the main character appears, or an image of a vehicle in a scene where the vehicle is running, etc. In the operation 22 of extracting the object, an image contained in the corresponding frame is segmented so that a boundary of the corresponding object can be extracted from the segmentation results.

In the operation 23 of assigning a depth, the depth is assigned to the object extracted in the operation 22 of extracting the object. The depth is a parameter for creating a 3D visual effect, which is used for shifting the objects corresponding to the generated left-eye and right-eye frames in left and right directions, respectively, based on a value of the assigned parameter. In the operation 23 of assigning the depth, a previously provided template may be used for assigning the depth.

In the operation 24 of tracking, the depth is assigned to the objects extracted from all but the key frame. The tracking operation 24 may be implemented with respect to the object extracting operation 22 and the depth assigning operation 23 as applied to the key frame. The tracking operation 24 may be bidirectionally implemented using a previous frame and a subsequent frame with respect to the key frame. In particular, corresponding objects in neighbor frames of the key frame are tracked in forward and backward directions of time with respect to the object extracted from the key frame.

As described above, a frame that is capable of maximizing accuracy and reliability of the 2D-3D conversion may be selected as the key frame, and the object extraction operation 22 and the depth assignment operation 23 are implemented with respect to the selected key frame. Further, the other frames are tracked with reference to the key frame. Therefore, it is possible to perform the conversion processes efficiently, with respect to both costs and time, while maintaining high quality.

In the rendering operation 25, an imaging process for completing a 3D image is performed with respect to each of the left-eye and right-eye frames which have been subjected to the depth assignment operation 23 and the tracking operation 24. For example, in the rendering operation 25, a process of filling a hole area caused by a shift of an object in a frame image, which is often referred to as "inpainting," may be performed.

At least one of the 2D-3D conversion processes according to the present exemplary embodiment may be carried out on the basis of information relating to contents and a development process of a scene of a frame to be processed (hereinafter, referred to as "storytelling information"). The storytelling information is information which is used for providing a 3D visual effect in response to a story development pertaining to the corresponding contents, in accordance with a content producer's intention. In this exemplary embodiment, the object extraction operation 22, the depth assignment operation 23, and the like processes may be performed on the basis of the storytelling information.

At least one process of the 2D-3D conversion processes according to the present exemplary embodiment may include a manual process performed in accordance with input of a worker (e.g., a developer who performs content converting work), and/or an automatic process performed in accordance with preset reference information. For example, in the object extraction operation 22, the depth assignment operation 23 and the like processes, some frames may be processed by manual processes and the other frames may be processed by automatic processes.

In a manual process, a conversion process may be performed in response to input of a worker. The content converting apparatus 1 may further include a user input unit 12, such as, for example, one or more of a keyboard, a mouse, a tablet, etc., for obtaining a user's input. In addition, the content converting apparatus 1 may further include a display unit 13, such as, for example, a monitor or the like, that displays an image undergoing the conversion process. To effectively receive a worker's input, the content converting apparatus 1 may provide a user interface (UI, to be described below) including one or more of an image of a processed frame, a predetermined input menu, etc. By using the UI, a worker can provide input for the conversion process through the input menu or the like of the user interface while viewing the image of the frame displayed on the display unit 13. For example, a worker may provide input relating to an extraction of an object through the input menu or the like of the user interface while viewing the corresponding object contained in an image of a frame.

In an automatic process, the process may be carried out on the basis of the preset reference information. For example, in an exemplary embodiment, in the object extraction operation 22, the content converting apparatus 1 analyzes an image of a frame, and selects an object, for which a change in a pixel value at a boundary of the object is not less than a predetermined threshold value, as an object to be extracted. In particular, the reference information may include the threshold value of the change in the pixel value at the boundary of the object.

The 2D-3D conversion process may be performed in correspondence with a quality of 3D contents. The quality of the 3D contents may show a degree to which the manual process and the automatic process are respectively performed in the 2D-3D conversion process. For example, the object extraction operation 22 may be performed by the manual process upon half of the frames and by the automatic process upon the other half of the frames. The quality of the 3D contents may be characterized by a plurality of quality modes. In accordance with one quality mode selected from among the plurality of quality modes, the 2D-3D conversion process may be performed. The quality of the 3D contents may be determined in accordance with the kinds and formats of the 2D contents.

In addition, 3D-image quality enhancement may be further performed upon a frame which has been subjected to the rendering operation 25. The 3D-image quality enhancement may include, for example, one or more of contrast enhancement, detail enhancement, etc. As a result of the 3D-image quality enhancement, image quality enhancement may be achieved to optimize image quality in a display device when 3D contents are actually displayed.

The content converting apparatus 1 includes a user interface (hereinafter, referred to as a "work UI") that provides a mechanism to enable a plurality of workers to participate in the 2D-3D conversion process in an efficient manner. The content converting apparatus 1 broadly divides the 2D-3D conversion process into two types of tasks, and provides the work UI such that each of the plurality of workers can be respectively assigned to and perform the two types of tasks. In accordance with a process flow, a first task type of the two types of tasks precedes a second task type, and the second task type follows the first task type. A worker from among the plurality of workers who is assigned to the first task type becomes a first worker (also referred to herein as a "director"), and a worker who is assigned to the second task type becomes a second worker (also referred to herein as an "editor"). Each of the first worker and the second worker may include either of a single worker or two or more workers. The first worker determines general matters relating to the 2D-3D conversion process. The matters determined by the first worker used for generating working directions with respect to certain work. The second worker performs detailed work according to the first worker's working directions relating to the assigned work. The work UI is provided so that the first worker's working directions relating to the work and the second worker's working performance based on the first worker's working directions can be smoothly and conveniently coordinated. Therefore, in the content converting apparatus 1 in this exemplary embodiment, the director and the editor can more easily carry out the 2D-3D conversion by using the work UI in a manner which is optimal with respect to the 2D-3D conversion process.

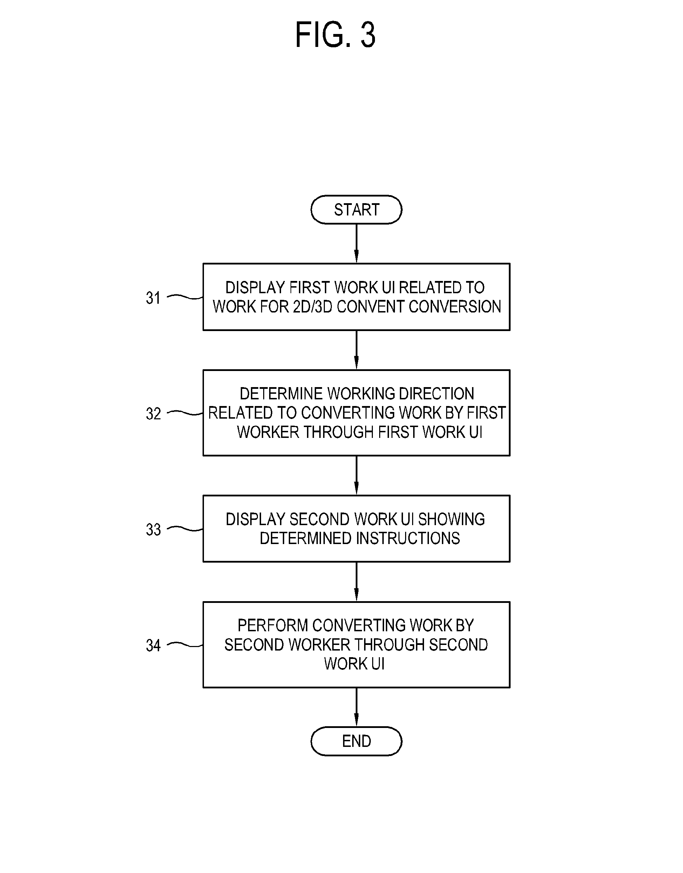

FIG. 3 is a flowchart showing an example of detailed operations of the content converting apparatus 1. At operation 31, the content converting apparatus 1 displays a first work UI to be used for performing processing tasks relating to 2D-3D conversion on the display unit 13. Then, at operation 32, the content converting apparatus 1 provides a platform for enabling the first worker to determine the working directions relating to the processing tasks for the conversion work by using the first work UI.

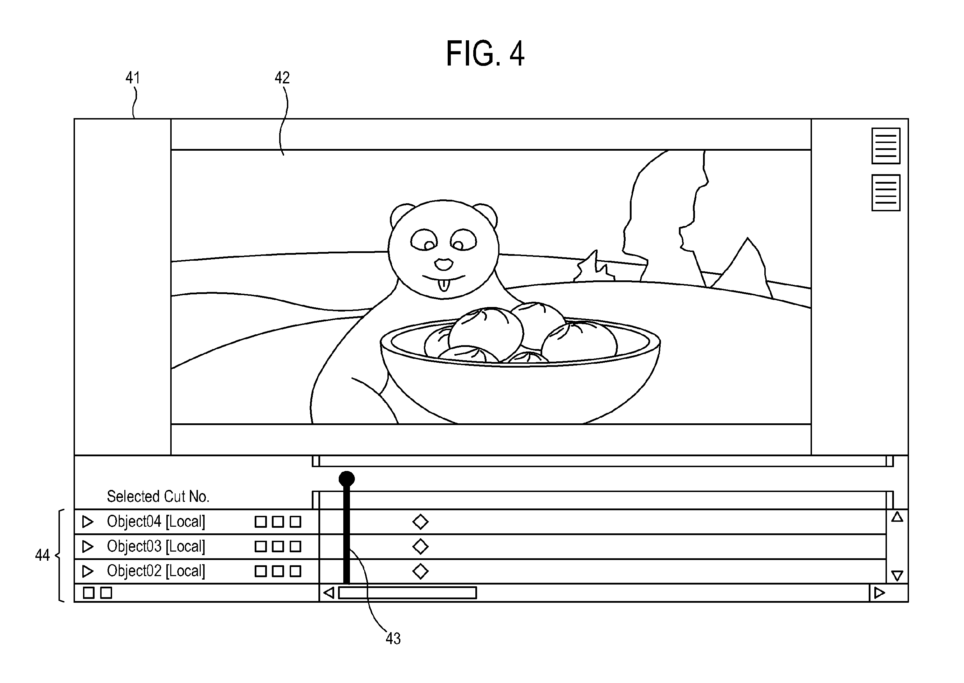

FIG. 4 shows an example of the first work UI provided by the content converting apparatus shown in FIG. 1. The first work UI 41 displays a frame 42 to be processed from among a plurality of frames of 2D contents. The first worker can select the frame 42 of a scene desired to be processed, by using a frame selection bar 43 provided in the first work UI 41. The first worker may generate the working directions with respect to the corresponding frame 42 through the first work UI 41. The working directions may be generated for each item associated with the converting work. In FIG. 4, a reference numeral 44 indicates a plurality of items generated by the first worker. The working directions may be generated according to objects within the frame 42. For example, each of the plurality of items 44 may correspond to a respective one of several objects (i.e., "object 02," "object 03," and "object 04") displayed within the frame 42, and the working directions may be determined separately for each object.

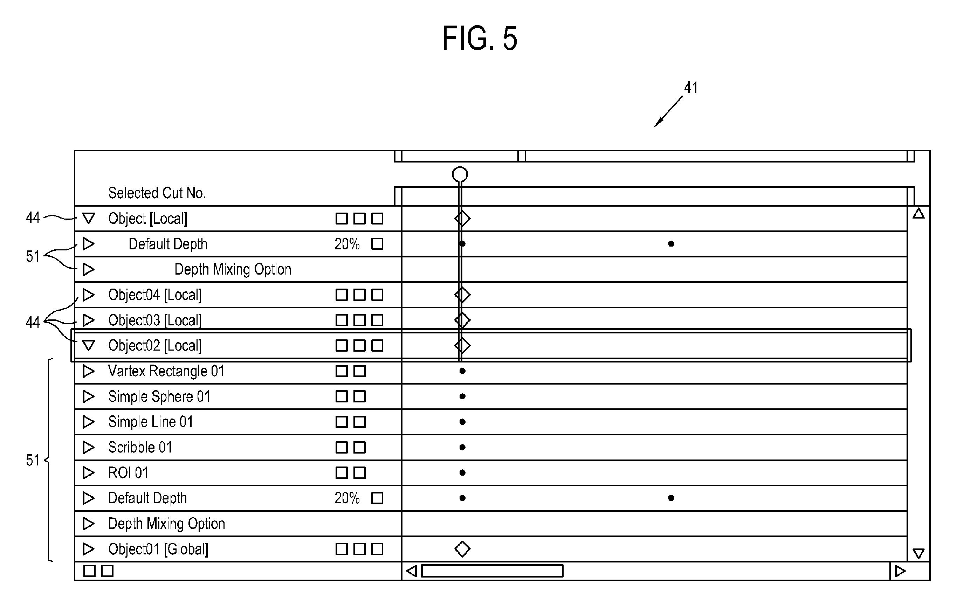

FIG. 5 shows an example of additional information displayed by the first work UI 41 shown in FIG. 4. Each item 44 may be associated with one or more processing tasks 51 relating to the conversion of the respective item 44. The first worker may provide working directions relating to each processing task 51 through the first work UI 41. For example, the first worker may provide working directions relating to at least one of the object extraction and the depth assignment with respect to the "object 02".

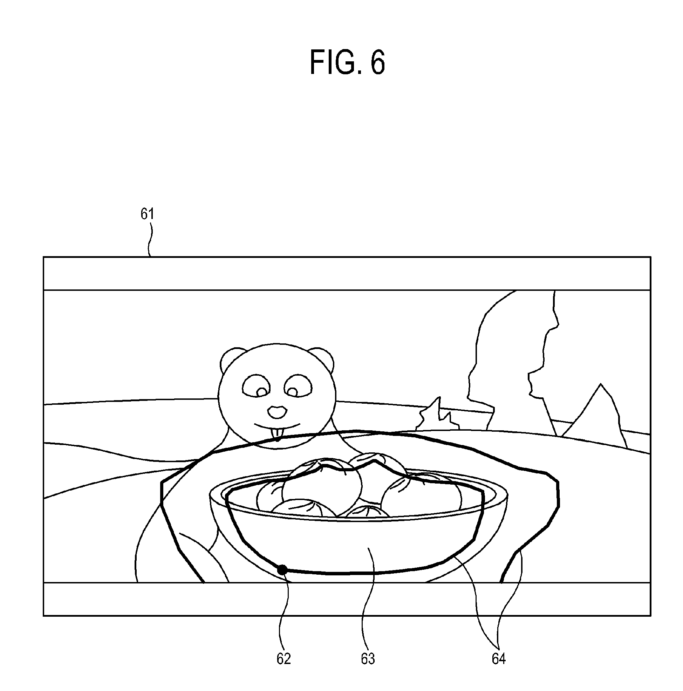

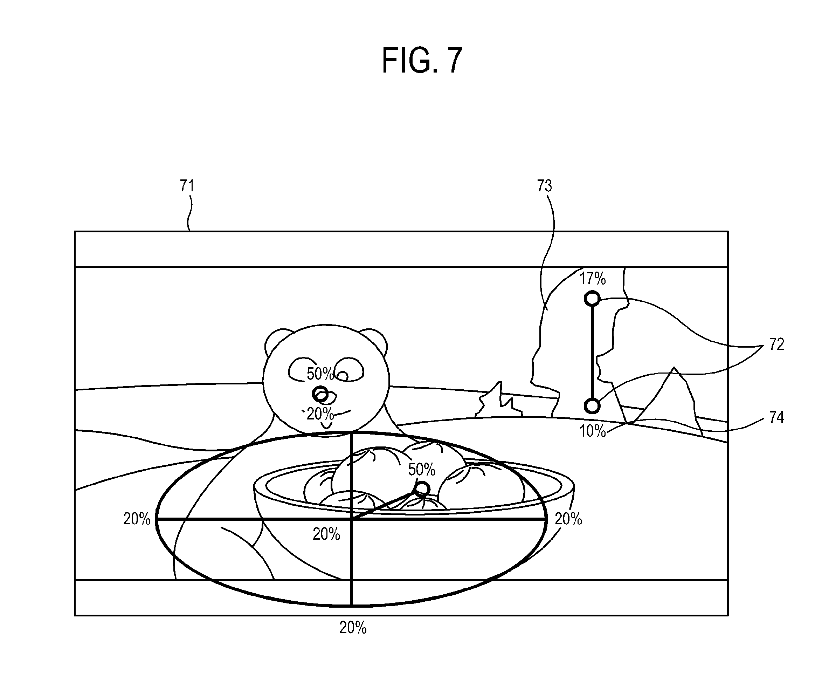

The first work UI 41 may include a tool UI which is displayed and manipulated on an image of the frame 44 such that the first worker can easily provide the working directions. FIGs. 6 and 7 show examples of providing the working directions by using the tool UI. As shown in FIG. 6, the first worker may draw a line 64 showing a boundary of an object 63 by using the tool UI 62 in order to provide the working directions relating to the object extraction within the frame 61. Alternatively, referring to FIG. 7, the first worker may set a value 74 corresponding to a depth to be assigned to the object 73 by using the tool UI 72 in order to provide the working directions relating to the depth assignment for the object within the frame 71. As shown in FIGs. 6 and 7, the tool UI 62, 72 may be freely controlled in response to the first worker's commands, and provided to be adapted to working characteristics and working directions to be provided. The working directions provided in accordance with the first worker's commands by using the tool UI 62, 72 are implemented on the item 44 described above with reference to FIGs. 4 and 5.

The types of directions provided by the first worker through the first work UI 41 are not limited to the foregoing examples described above. For example, the first worker may draw a mark, a drawing or the like (not shown) relating to the item, or create a memo (not shown) relating to the item to be converted on the image of the frame through the first work UI 41.

Referring back to FIG. 3, at operation 33, the content converting apparatus 1 displays a second work UI showing the determined directions on the display unit 13. Then, at operation 34, the content converting apparatus 1 provides a platform which enables the second worker to perform the converting work based on the working directions by using the second work UI.

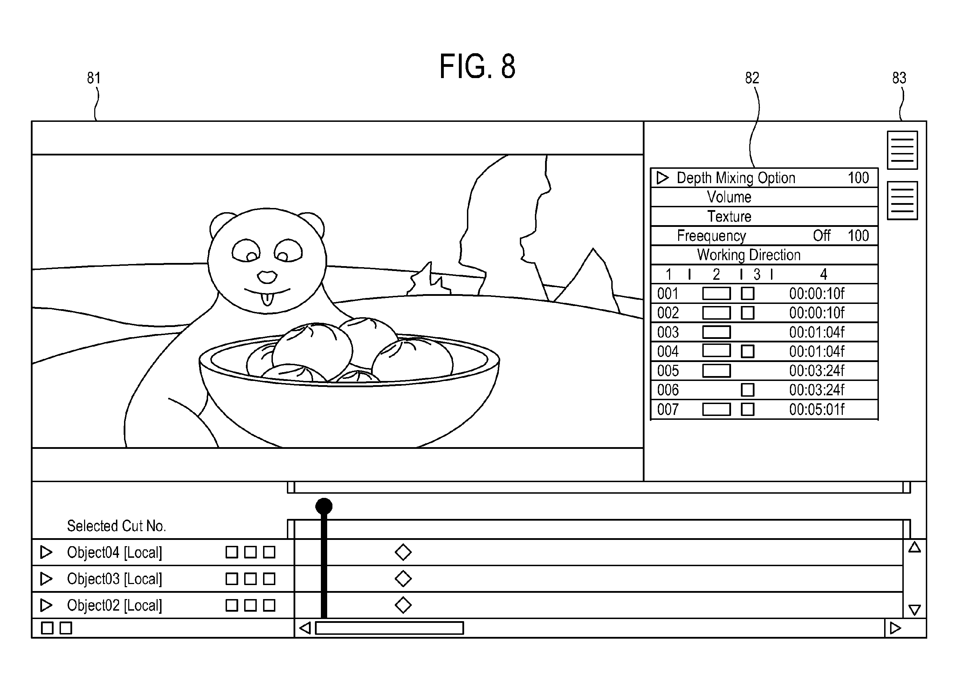

FIG. 8 shows an example of a second work UI provided by the content converting apparatus 1. The second work UI 81 enables the second worker to easily know the working directions provided by the first worker with respect to the item to be converted. The second work UI 81 may contain a list 82 of the working directions provided by the first worker with respect to the item or items to be converted. The list 82 may be displayed or represented by an icon 83 provided on the second work UI 81.

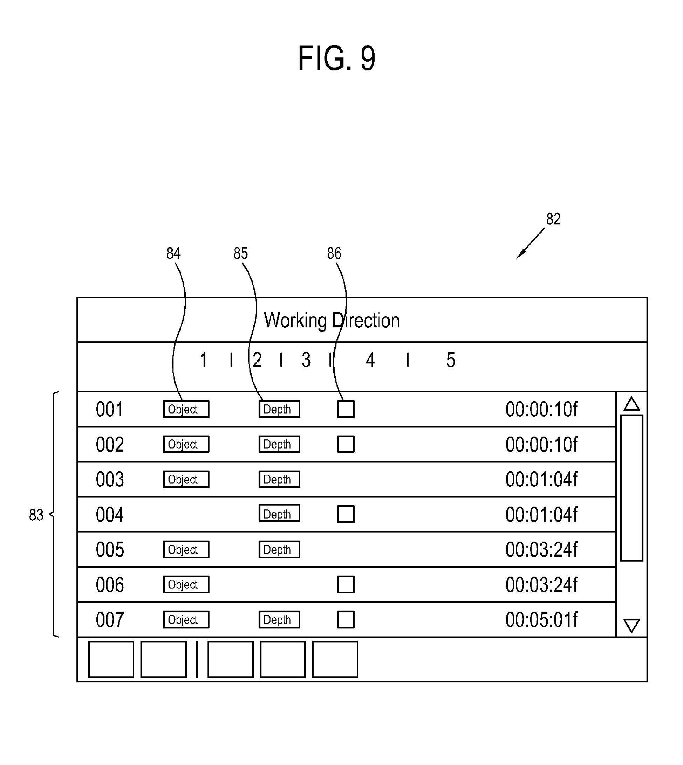

FIG. 9 shows an example of a detailed list of directions displayed by the second work UI shown in FIG. 8. The list 82 includes a plurality of items 83 to which the working directions pertain. The list 82 includes contents of the working directions provided for each item 83. For example, each item 83 may include one or more of a direction 84 relating to the object extraction, a direction 85 relating to the depth assignment, and/or other directions 86, and each of the direction types 84, 85, and 86 may be indicated by an icon, as illustrated in FIG. 9. The list 82 may also include a status of each of the working directions for each item 83 as they are executed.

If the second worker clicks the icon 84, 85, 86 of a certain working direction provided with respect to an item 83 in the list 82, the second work UI 81 can show the contents of the corresponding working direction in detail. For example, if the icon 84 corresponding to the working direction relating to the object extraction is clicked, referring also to FIG. 6, the second work UI 81 may show an image 61 of the corresponding frame, including a display of a line 64 indicating a boundary of an object 63 within the image 61, as provided by the first worker. Thus, the second worker may perform the task of extracting the object 63 with reference to the working directions specified by the first worker. Alternatively, if the icon 85 corresponding to the working direction relating to the depth assignment is clicked, referring also to FIG. 7, the second work UI 81 may show an image 71 of the corresponding frame, including a display of a value 74 indicating a depth of an object 73 within the image 71, as provided by the first worker. Thus, the second worker may perform the task of assigning the depth to the object 73 with reference to the working directions specified by the first worker. Alternatively, although it is not shown, if the icon 86 corresponding to other working directions is clicked, the second work UI 81 may show one or more of a mark, a drawing, a memo, etc. provided on an image of a corresponding frame by the first worker.

Accordingly, the work UI provided by the content converting apparatus 1 according to an exemplary embodiment is used to conveniently distribute work to the plurality of workers, manage the work, and enable effective communication relating to the work, thereby improving work efficiency.

As described above, there are provided an apparatus and method for converting contents, which include providing a user interface for improving work efficiency when a plurality of workers perform 2D-3D conversions.

In addition, there are provided an apparatus and method for converting contents, which include providing a user interface for improving work efficiency by effectively distributing 2D-3D processing tasks based on work characteristics.

Further, there are provided an apparatus and method for converting contents, which include providing a user interface for improving work efficiency by facilitating effective communication among workers.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

## Claims

1. A method for converting two-dimensional (2D) contents into three-dimensional (3D) contents by using a content converting apparatus, the method comprising:
displaying a first work user interface (UI) relating to at least one item for converting 2D contents into 3D contents;
by a first worker, determining a working direction relating to performing a conversion upon the at least one item by using the first work UI;
displaying a second work UI showing the working direction determined by the first worker; and
by a second worker, executing the determined working direction upon the at least one item by using the second work UI.

2. The method according to claim 1, wherein the determining of the working direction comprises generating the working direction for each item to be converted.

3. The method according to claim 2, wherein the generating of the working direction comprises generating the working direction for each object within a predetermined frame of the 2D contents.

4. The method according to claim 2, wherein the displaying of the second work UI comprises displaying a list of the at least one generated working direction.

5. The method according to one of claims 1 to 4, wherein the working direction comprises a working direction relating to at least one of object extraction within a predetermined frame of the 2D contents and depth assignment.

6. The method according to claim 5, wherein the first work UI comprises a tool UI displayed on an image of a corresponding frame and controllable by the first worker, and
the determining of the working direction comprises providing a working direction relating to at least one of the object extraction and the depth assignment by using the tool UI.

7. The method according to claim 6, further comprising displaying the provided working direction on an image of a corresponding frame if the working direction is selected.

8. An apparatus for converting two-dimensional (2D) contents into three-dimensional (3D) contents, the apparatus comprising:
a user input unit which receives a command from a worker;
a display unit; and
a converter which:
displays a first work user interface (UI) relating to at least one item for converting 2D contents into 3D contents on the display unit;
determines a working direction relating to performing a conversion upon the at least one item based on a command received from a first worker by using the first work UI;
displays a second work UI showing the determined working direction; and
executes the working direction upon the at least one item in response to a command received from a second worker by using the second work UI.

9. The apparatus according to claim 8, wherein the converter generates the working direction for each item to be converted in response to the command received from the first worker.

10. The apparatus according to claim 9, wherein the converter generates the working direction for each object within a predetermined frame of the 2D contents in response to the command received from the first worker.

11. The apparatus according to claim 9, wherein the second work UI comprises a list of the at least one generated working direction.

12. The apparatus according to one of claims 8 to 11, wherein the working direction comprises a working direction relating to at least one of object extraction within a predetermined frame of the 2D contents and depth assignment.

13. The apparatus according to claim 12, wherein the first work UI comprises a tool UI displayed on an image of a corresponding frame and controllable by the first worker, and
the converter provides a working direction relating to at least one of the object extraction and the depth assignment in response to the command received from the first worker via the tool UI.

14. The apparatus according to claim 13, wherein the converter displays the provided working direction on an image of a corresponding frame on the display unit if the working direction is selected in response to the command received from the second worker.
